# FASCICULE DE BREVET EUROPEEN

(11) **EP 0 513 882 B1**
(45) Date de publication et mention de la délivrance du brevet: **02.08.1995**
(21) Numéro de dépôt: 92200842.0
(22) Date de dépôt: 24.03.1992
(51) Int. Cl.: G01F 1/12

(54) **Système volumétrique mesureur de débit de fluide**
Volumetrisches System zum Messen des Durchflusses einer Flüssigkeit
Volumetric system to measure the flow rate of a fluid

(30) Priorité: 26.04.1991 FR 9105211
(43) Date de publication de la demande: 19.11.1992
(73) Titulaire: SCHLUMBERGER INDUSTRIES, F-92120 Montrouge (FR)
(72) Inventeur: Janssen, Sylvain, F-92200 Neuilly (FR); Fournier, Jacques, F-91220 Bretigny s/Orge (FR); Campain, Jean-Pierre, F-92140 Clamart (FR)

(56) Documents cités:
- WO-A-82/04315
- US-A- 3 788 142

## Description

La présente invention a pour objet un sytème volumétrique mesureur de débit de fluide.

De façon plus précise, l'invention concerne un système capable de mesurer des débits de fluide, notamment d'hydrocarbures, avec une grande qualité métrologique, ce système étant basé sur une mesure volumétrique du débit de fluide.

L'invention s'applique notamment à la réalisation de groupes mesureurs pour des distributeurs d'hydrocarbure mais non exclusivement à ce domaine technique.

Fonctionnellement, les distributeurs d'hydrocarbure se composent essentiellement d'une pompe pour aspirer l'hydrocarbure dans la cuve de stockage et le refouler vers la lance de distribution, d'un groupe mesureur pour mesurer le volume d'hydrocarbure effectivement délivré à l'utilisateur et d'un groupe calculateur pour convertir cette mesure et afficher l'indication fournie par le groupe mesureur sous forme d'un volume et un prix d'hydrocarbure délivré.

Dans la quasi totalité des distributeurs d'hydrocarbure, il existe aujourd'hui un seul principe permettant d'obtenir un comptage de fluide avec une erreur ne dépassant pas 10⁻³ de la quantité mesurée dans un intervalle de débit allant de 1 à 20 au moins. Ainsi, tous les distributeurs de carburant sont aujourd'hui équipés de compteurs volumétriques à piston étanche travaillant sur le principe de la machine à vapeur. Le déplacement alternatif d'un piston dans un cylindre sous l'effet de la pression du fluide obtenu par l'ouverture automatique et synchronisé de clapets d'admission et de refoulement puis transformé en mouvement de rotation continue permet, grâce à :
un calage correct des ouvertures et fermetures des clapets ;
une étanchéité interne parfaite ;
un remplissage et une vidange complète à chaque cycle ; et
une mesure incrémentale précise de l'angle de rotation ; de garantir la précision de mesure souhaitée. Le compteur volumétrique ainsi réalisé est en général de taille importante et entraîne une perte de charge non négligeable pour vaincre les frottements internes entre les pistons mobiles et la paroi des cylindres. Par voie de conséquence, ce type de compteur volumétrique est également un véritable moteur hydraulique qui peut, sans problème, fournir l'énergie suffisante pour entraîner de plus les mécanismes complexes des calculateurs volume-prix utilisés le plus souvent.

Cependant, les groupes calculateurs mécaniques sont le plus souvent maintenant remplacés par des calculateurs électroniques constitués par un détecteur électronique de la rotation du groupe mesureur sans contact. Le besoin de puissance d'origine hydraulique qui était nécessaire pour entraîner le calculateur mécanique n'existe donc plus.

En outre, on sait que, dans le cas d'un distributeur d'hydrocarbure, on dispose de la puissance mécanique qui est nécessaire pour l'entraînement de la pompe ou de puissance électrique. On connaît déjà du brevet américain US-3,788,142, un dispositif mesureur qui entre autres pourrait également servir comme mesureur d'un volume fourni par unité de temps. Cet appareil est muni d'un moteur du type turbine par exemple comme compteur mécanique, et des moyens pour annuler sensiblement la perte de charge du fluide entre l'entrée et la sortie dudit fluide. Mais, on sait, qu'un tel appareil selon l'US-3,788,142 pourrait causer des problèmes en étant appliqué comme mesureur volumétrique d'hydrocarbure monté dans une pompe distributeur d'essence.

Compte tenu de cette situation, un objet de la présente invention est d'améliorer un compteur volumétrique comme un dispositif présentant la même précision que les compteurs antérieurs qui est de plus insensible à la nature du fluide.

Pour atteindre ce but, le principe de l'invention consiste à réaliser un système mesureur volumétrique de précision à partir d'un dispositif de comptage mécanique rotatif du type volumétrique connu en soi mais dans lequel le frottement est annulé à tout moment par l'application d'une force antagoniste dont l'intensité est déterminée par un servo-mécanisme.

Pour atteindre ce but, le système mesureur de débit comprenant un compteur mécanique volumétrique rotatif présentant une entrée et une sortie de fluide à mesurer, des moyens (38, 120) pour élaborer une information représentative de la perte de charge du fluide entre une entrée et une sortie, et des moyens (116, 18) commandés par ladite information pour fournir audit compteur mécanique (14, 108) de l'énergie pour annuler sensiblement ladite perte de charge, caractérisé en ce qu'il s'agit d'un capteur de pression différentiel (38, 120) pour élaborer une information représentative de la perte de charge du fluide entre ladite entrée (32, 100) et sortie (34, 112).

On comprend qu'ainsi le système mesureur se présente sous la forme d'un système formant une boucle de régulation asservie qui fournit au compteur l'énergie nécessaire pour annuler la perte charge entre son entrée et sa sortie due au frottement entre les parties mobiles et les parties fixes de celui-ci.

Selon un mode préféré de mise en oeuvre, les moyens d'élaboration de l'informations comprennent un compteur de pression différentielle entre l'entrée et la sortie du compteur et les moyens pour fournir de l'énergie comprennent des moyens moteurs commandés par ladite information de pression différentielle pour fournir un couple moteur audit compteur tendant ainsi à annuler la perte de charge.

D'autres caractéristiques et avantages de la présente invention apparaîtront plus clairement à la lecture de la description qui suit de plusieurs modes de mise en oeuvre de l'invention. La description se réfère aux figures annexées sur lesquelles :
- la figure 1 est une vue en coupe verticale d'un système mesureur selon un premier mode de réalisation ; et
- la figure 2 montre en coupe verticale un deuxième mode de réalisation du groupe mesureur volumétrique.

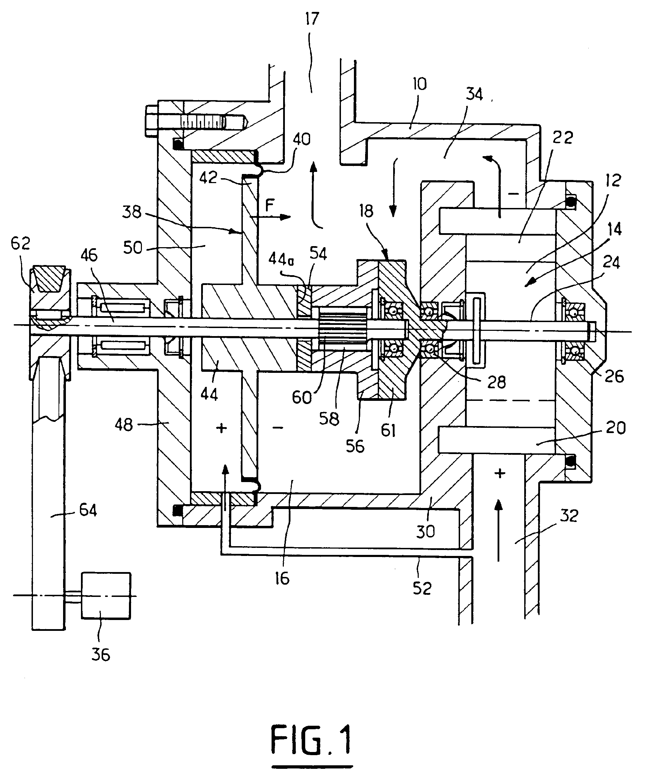

En se référant tout d'abord à la figure 1, on va décrire un premier mode de réalisation du système mesureur selon l'invention. Celui-ci est enfermé à l'intérieur d'un boîtier 10 qui définit lui-même un premier carter 12 dans lequel est monté le compteur volumétrique 14 et un deuxième carter 16 dans lequel est monté le dispositif correcteur 18. Le carter 16 comporte la conduite de sortie 17 du système mesureur. Le compteur 14 est par exemple du type à engrenage constitué par une denture externe 20 et par une denture interne 22. De tels compteurs sont bien connus et sont par exemple décrits dans la demande de brevet européen No. 0 344 059 déposée au nom de la demanderesse. L'engrenage mené 22 est solidaire d'un arbre longitudinal 24 monté dans des paliers 26 et 28 ménagés dans des parois du boîtier 10 et dans une cloison 30 séparant le carter 12 du compteur 14 du carter 16 du système correcteur 18. Le carter 12 du compteur 14 comporte une canalisation 32 d'arrivée de l'hydrocarbure à mesurer et une canalisation ou passage 34 de sortie de cet hydrocarbure. Plus précisément le passage 34 fait communiquer les carters 12 et 16.

Le système correcteur 18 permet d'appliquer au compteur 14 un couple, délivré par un organe moteur 36 extérieur au boîtier 10, lorsque la différence de pression entre l'entrée 32 du compteur et sa sortie 34 n'est pas nulle. Pour cela le système correcteur 18 se compose essentiellement d'un capteur de pression différentielle portant la référence générale 38 et d'un dispositif d'accouplement commandé par le capteur de pression différentielle 38 pour transmettre l'énergie mécanique produite par les moyens moteurs 36 au compteur 14 afin de supprimer en permanence la perte de charge dans celui-ci.

Le capteur de pression différentielle 38 est essentiellement constitué par une membrane déformable 40 dont la périphérie est solidaire de la paroi latérale du boîtier 10 et par un plateau central 42. La partie centrale 44 du plateau 42 forme un moyeu qui peut coulisser librement sur l'arbre 46 relié aux moyens moteurs 36. Le plateau 42 et la membrane déformable 40 limitent avec la paroi 48 du boîtier 10 une chambre étanche 50 dans laquelle débouche une canalisation 52 qui relie la chambre 50 à la conduite d'entrée 32 du compteur 14. Ainsi, la chambre 50 est maintenue en permanence à une pression égale à la pression d'entrée du fluide dans le compteur 14. On comprend également que l'ensemble constitué par la membrane déformable 40 et le plateau 42 est soumis à une différence de pression qui est égale à la différence entre la pression d'entrée régnant dans la chambre 50 et la pression de sortie du compteur régnant dans le reste du carter 16. Le moyeu 44 se déplace donc sur l'arbre 46 lorsqu'apparaît une différence de pression.

Comme le montre la figure 1, la face terminale 44a du moyeu 44 est munie d'un disque anti-friction 54. Un premier plateau d'embrayage 56 est monté sur l'arbre 46 de telle manière qu'il soit libre en translation mais solidaire de celui-ci en rotation. Celà est obtenu de préférence par la coopération de cannelures respectivement internes 58 et externes 60 ménagées autour de l'arbre 46 et dans le premier plateau d'embrayage 56. Un deuxième plateau d'embrayage 61 est solidaire en translation et en rotation de l'extrémité de l'arbre 24 du compteur 14. Un matériau à friction est interposé entre les faces en regard des plateaux d'embrayage 56 et 61, pour assurer une friction par glissement en rotation lorsqu'ils sont appliqués progressivement l'un contre l'autre.

Sur la figure 1 on a représenté les moyens moteurs 36 par une poulie 62 montée sur l'extrémité de l'arbre 46 et par une courroie 64 reliant la poulie 62 à un moteur qui est par exemple le moteur de la pompe du distributeur d'hydrocarbure.

En l'absence de débit dans le compteur 14, le plateau 42 occupe sa position de repos, la partie centrale 44 du plateau 42 n'étant pas en contact avec le disque 54. En conséquence, les plateaux d'embrayage 56 et 61 ne sont pas en contact non plus. Lorsque le débit s'installe dans le compteur 14, il apparaît nécessairement une différence de pression entre l'entrée 32 et la sortie 34 du compteur qui, n'étant pas étanche, tourne avec une vitesse qui nécessite une correction pour être métrologique.

La membrane déformable et son plateau 42 se déplacent alors dans la direction indiquée par la flèche F. Ce déplacement entraîne un déplacement en translation dans la même direction du premier plateau d'embrayage 56 jusqu'à venir l'appuyer sur le deuxième plateau d'embrayage 61 et l'entraîner progressivement par friction. Le plateau 56 tourne toujours plus vite que le plateau entraîné 61 et lui transmet par frottement un couple qui, en accélérant le compteur 14 diminue progressivement sa perte de charge laquelle tend vers zéro. C'est finalement une perte de charge résiduelle notablement diminuée qui assure l'appui permanent des plateaux 56 et 61 l'un sur l'autre. De l'énergie mécanique est donc transmise au compteur 14. Celle-ci est augmentée jusqu'à ce qu'un appui permanent, dosé par le servomécanisme, assure un état d'équilibre où le compteur à engrenage 12 tourne pratiquement sans fuite interne et a ainsi acquis une grande qualité métrologique.

On tend d'autant mieux vers cet état idéal de perte de charge nulle qu'on assure au servo-mécanisme ainsi réalisé un grand gain en boucle ouverte. Celà est obtenu essentiellement en donnant une section efficace élevée au capteur de pression différentielle, c'est-à-dire au plateau 42 et à la membrane déformable 40. Ce résultat est également obtenu en donnant une vitesse de rotation élevée à l'arbre 42 entraîné par les moyens moteurs 36.

La rotation de l'arbre 24 du compteur est donc celle du plateau d'embrayage 61 et représente le débit du fluide traversant le compteur 12. Un capteur de rotation, non représenté sur la figure, peut être intégré dans le fluide au voisinage du plateau 61 pour mesurer la rotation de ce dernier et assurer le comptage du débit de fluide. Il faut également préciser que le fluide remplissant le carter 16 et qui entoure donc le système mécanique de transmission d'énergie assure sa lubrification et son refroidissement.

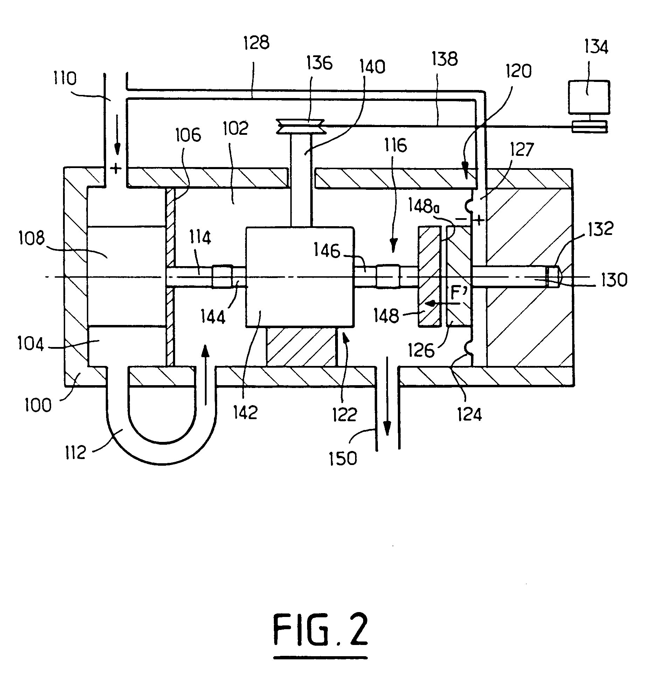

En se référant maintenant à la figure 2, on va décrire un deuxième mode de réalisation du système mesureur.

Celui-ci comprend également un boîtier 100 qui est partagé en deux carters respectivement référencés 102 et 104 par une cloison interne étanche 106. Dans le carter 104 est monté à rotation un compteur à engrenages 108 du type déjà décrit en liaison avec la figure 1. Le carter 104 comporte une canalisation d'arrivée de l'hydrocarbure 110 et une canalisation de sortie 112 qui est directement connectée au carter 102. Le compteur volumétrique 108 comporte un arbre de sortie 114 qui est monté à pivotement étanche dans la cloison 106 et pénètre ainsi dans le carter 102. Le carter 102 contient le système correcteur 116. Celui-ci est essentiellement constitué par un capteur de pression différentielle 120 et un organe de transmission d'énergie mécanique 122. Comme dans le cas de la figure 1, le capteur de pression différentielle 120 est constitué par une membrane déformable 124 sur laquelle est fixé un plateau central 126. La membrane 124 et le plateau 126 limitent avec une paroi du boîtier 100 une chambre interne 127. La chambre interne 127 est mise en communication avec la canalisation d'entrée d'hydrocarbure 110 par une canalisation 128. La pression dans la chambre 127 est donc en permamence égale à la pression d'entrée de l'hydrocarbure dans le compteur 108. En outre, le plateau 126 est solidaire d'un arbre 130 monté à coulissement dans un logement 132 de la paroi du boîtier.

L'énergie mécanique de correction est fournie par un moyen moteur 134 dont la sortie est reliée à une poulie 136 par un courroie 138. La poulie 136 est montée à l'extrémité d'un arbre 140 qui traverse de façon étanche la paroi du boîtier 100. L'arbre 140 constitue l'axe central d'un système différentiel portant la référence générale 142. Comme celà est bien connu, le système différentiel 142 comporte également un premier arbre de sortie 144 qui est solidaire en rotation de l'arbre 114 du compteur 108 et un deuxième arbre de sortie 146 qui est solidaire d'un plateau de freinage 148 disposé en regard du plateau 126 du capteur de pression différentielle. Le plateau 148 est muni sur sa face 148a d'un matériau de friction. Enfin le carter 102 comporte une canalisation de sortie 150 qui constitue la sortie du système mesureur.

Le fonctionnement de ce deuxième mode de réalisation du système mesureur est le suivant : lorsque le compteur volumétrique 104 présente une perte de charge, une différence de pression est appliquée à la membrane déformable 124. Il en résulte un déplacement du plateau 126 dans le sens indiqué par la flèche F′. Le plateau 126 vient au contact du disque de freinage 148, ce qui a pour effet de faire chuter la vitesse de rotation V₂ de l'arbre 146 du différentiel 142. La vitesse de rotation V de l'arbre 140 entraîné par les moyens moteurs 134 étant constante, la vitesse de rotation V₁ de l'arbre 144 augmente transmettant ainsi de l'énergie mécanique au compteur volumétrique 108. Cet apport d'énergie tend à annuler les pertes de charge et donc la différence de pression du fluide entre l'entrée 110 et la sortie 112. La perte de charge reste annulée tant que le plateau 126 est maintenu en appui avec une pression dosée par le servomécanisme à membrane. On comprend qu'on réalise ainsi une boucle de régulation asservie du compteur telle que la différence de pression aux bornes du compteur soit toujours nulle.

On comprend également que cet asservissement en compensant les pertes de charge empêche l'apparition de fuites à l'intérieur du compteur. Il en résulte que les qualités métrologiques du compteur qui, au départ, étaient médiocres sont considérablement améliorées, même durant les phases d'accélération du compteur.

Il va de soi qu'on ne sortirait pas de l'invention si l'on associait au compteur volumétrique un autre type de capteur de pression différentielle et un autre mécanisme d'accouplement entre les moyens moteurs externes et l'arbre du compteur afin de compenser en permanence les frottements internes du compteur.

## Revendications

1. Système mesureur de débit comprenant un compteur mécanique volumétrique rotatif (14) présentant une entrée (32, 100) et une sortie (34, 112) de fluide à mesurer, des moyens (38, 120) pour élaborer une information représentative de la perte de charge du fluide entre ladite entrée (32, 100) et ladite sortie (34, 112), et des moyens (116, 18) commandés par ladite information pour fournir audit compteur mécanique (14, 108) de l'énergie pour annuler sensiblement ladite perte de charge, caractérisé en ce qu'il s'agit d'un capteur de pression différentiel (38, 120) pour élaborer une information représentative de la perte de charge du fluide entre ladite entrée (32, 100) et sortie (34, 112).

2. Système mesureur selon la revendication 1, caractérisé en ce que lesdits moyens (116, 18) pour fournir de l'énergie comprennent des moyens moteurs (36, 134) commandés par ladite information pour fournir un couple moteur audit compteur.

3. Système mesureur selon la revendication 2, caractérisé en ce que ledit capteur de pression différentielle comprend une membrane déformable (40) soumise à la différence des pressions du fluide auxdites entrée et sortie, et en ce que ladite membrane (40) commande un système d'embrayage (54, 56, 61) pour relier lesdits moyens moteur (36) à l'arbre (24) dudit compteur (14) lorsque la différence de pression n'est pas nulle.

4. Système mesureur selon la revendication 3, caractérisé en ce que la boucle d'asservissement comprenant le compteur (14), le capteur de pression différentielle (38) et l'embrayage (54, 56, 61) présente un gain élevé pour faire tendre effectivement la perte de charge du compteur vers zéro.

5. Système mesureur selon la revendication 2, caractérisé en ce que ledit capteur de pression différentielle comprend une membrane déformable (124) soumise à la différence des pressions du fluide auxdites entrée (110) et sortie (112) et en ce que ladite membrane (124), lorsque ladite différence n'est pas nulle, est capable de provoquer l'augmentation de la vitesse de rotation de l'arbre de sortie (144) d'un système différentiel (142), relié à l'arbre (114) dudit compteur (108), l'arbre d'entrée (140) dudit système différentiel étant relié aux moyens moteurs externes (134).

6. Système mesureur selon l'une quelconque des revendications 1 à 5, caractérisé en ce que ledit compteur volumétrique (14, 108) est du type à engrenages.

## Patentansprüche

1. Durchsatzmeßsystem, umfassend einen mechanischen, umlaufenden volumetrischen Zähler (14) mit einem Einlaß (32, 110) und einem Auslaß (34, 112) des zu messenden Fluids, Mittel (38, 120) zum Gewinnen einer Information, die repräsentativ ist für den Fluiddruckverlust zwischen dem Einlaß (32, 110) und dem Auslaß (34, 112), und Mittel (116, 18), gesteuert von der Information zum Übertragen auf den mechanischen Zähler (14, 108) von Energie zum weitgehenden Annullieren der Druckverluste, dadurch gekennzeichnet, daß es sich um einen Differenzdrucksensor (38, 120) handelt zum Gewinnen einer Information, die repräsentativ ist für den Fluiddruckverlust zwischen dem Einlaß (32, 110) und dem Auslaß (34, 112).

2. Meßsystem nach Anspruch 1, dadurch gekennzeichnet, daß die Mittel (116, 18) für die Übertragung der Energie Motormittel (36, 134) umfassen, gesteuert von der Information, um ein Antriebsmoment auf den Zähler zu übertragen.

3. Meßsystem nach Anspruch 2, dadurch gekennzeichnet, daß der Differenzdrucksensor eine deformierbare Membran (40) umfaßt, die der Druckdifferenz des Fluids zwischen Einlaß und Auslaß unterworfen ist, und daß die Membran (40) ein Kupplungssystem (54, 56, 61) steuert zum Verbinden der Motormittel (36) mit der Welle (24) des Zählers (14), wenn die Druckdifferenz von Null abweicht.

4. Meßsystem nach Anspruch 3, dadurch gekennzeichnet, daß die Regelschleife, die den Zähler (14), den Differenzdrucksensor (38) und die Kupplung (54, 56, 61) umfaßt, eine hohe Verstärkung aufweist, um wirksam den Druckverlust des Zählers gegen Null gehen zu lassen.

5. Meßsystem nach Anspruch 2, dadurch gekennzeichnet, daß der Differenzdrucksensor eine deformierbare Membran (124) umfaßt, die der Differenz der Drücke des Fluids am Einlaß (110) bzw. Auslaß (112) unterworfen ist, und daß die Membran (124), wenn diese Differenz von Null abweicht, in der Lage ist, die Erhöhung der Drehgeschwindigkeit der Auslaßwelle (144) eines Differentialsystems (142) zu bewirken, verbunden mit der Welle (114) des Zählers (108), wobei die Eingangswelle (140) des Differentialsystems mit äußeren Motormitteln (134) verbunden ist.

6. Meßsystem nach einem der Ansprüche 1 bis 5, dadurch gekennzeichnet, daß der volumentrische Zähler (14, 108) vom Zahnradtyp ist.

## Claims

1. A flow measuring system comprising a rotary mechanical positive-displacement meter (14) having an inlet (32, 100) and an outlet (34, 112) for the fluid to be measured, means (38, 120) for deriving a signal representing the loss of head of the fluid between said inlet (32, 100) and said outlet (34, 112), and control means (116, 18) responsive to said signal to provide power to said mechanical meter for substantially cancelling said loss of head, the system being characterized in that it acts as a differential pressure detector (38, 120) for deriving a signal representing the loss of head of the fluid between said inlet (32, 100) and said outlet (34, 112).

2. A measuring system according to claim 1, characterized in that said means (116, 18) for providing power comprise motor means controlled by said signal to provide torque to said meter.

3. A measuring system according to claim 2, characterized in that said differential pressure detector comprises a deformable membrane (40) responsive to the difference between the pressures of the fluid at said inlet and outlet, and in that said membrane (40) controls a clutch device (54, 56, 61) to connect said motor means (36) to the shaft (24) of said meter (14) when the pressure difference is not zero.

4. A measuring system according to claim 3, characterized in that the control loop comprising the meter (14), the differential pressure detector (38) and the clutch (54, 56, 61) has a high gain in order to make the loss of head effectively tend towards zero.

5. A measuring system according to claim 2, characterized in that said differential pressure detector comprises a deformable membrane (124) responsive to the difference between the pressures of the fluid at said inlet (110) and outlet (112), and in that said membrane is adapted, when said difference in not zero, to cause an increase in the speed of rotation of the output shaft (144) of a differential device (142) connected to the shaft of said meter (108), the input shaft (140) of said differential device being connected to external motor means (134).

6. A measuring system according to any one of claims 1 to 5, characterized in that said positive-displacement meter (14, 108) is of gear type.
